Europäisches Patentamt

European Patent Office

Office européen des brevets

(11) Veröffentlichungsnummer: **0 054 880**
**B1**

(12) # EUROPÄISCHE PATENTSCHRIFT

(45) Veröffentlichungstag der Patentschrift:
11.07.84

(51) Int. Cl.³: **B 60 N 1/00**

(21) Anmeldenummer: 81110418.1

(22) Anmeldetag: 14.12.81

(54) **Vibrationsgedämpfte Sitzlagerung.**

(30) Priorität: 24.12.80 US 219987

(43) Veröffentlichungstag der Anmeldung:
30.06.82 Patentblatt 82/26

(45) Bekanntmachung des Hinweises auf die Patenterteilung:
11.07.84 Patentblatt 84/28

(84) Benannte Vertragsstaaten:
AT DE FR GB IT SE

(56) Entgegenhaltungen:
EP - A - 0 019 399
FR - A - 1 398 491
FR - A - 2 439 099
US - A - 3 134 568
US - A - 4 228 984

(73) Patentinhaber: DEERE & COMPANY, 1 John Deere Road, Moline Illinois 61265 (US)

(72) Erfinder: Thompson, Raymond Dennis, 1830 Lorraine Avenue, Waterloo Iowa 50702 (US)

(74) Vertreter: Gramm, Werner, Prof. Dipl.-Ing. et al, Patentanwälte Gramm + Lins Theodor-Heuss-Strasse 2, D-3300 Braunschweig (DE)

## Beschreibung

Die Erfindung betrifft eine vibrationsgedämpfte Sitzlagerung, bestehend aus einem den eigentlichen Sitz aufnehmenden Sitzträger, der über Gleit-, Dämpfungs- und Zentrierelemente so mit einem Bodenteil verbunden ist, dass der Sitzträger entlang einer Verschiebungsachse relativ gegenüber dem Bodenteil begrenzt gedämpft verschiebbar und diesem gegenüber in einer Zentrierstellung federelastisch gehalten ist.

Derartige Sitzlagerungen werden insbesondere in Schleppersitze, oder in Sitze anderer Querfeldein-Fahrzeuge eingebaut, die hohen Frequenzen und anderen Bewegungen unterliegen, die sich aus der Art des Fahrzeugs selbst sowie aus den Unebenheiten des Geländes ergeben. Bekannt ist eine Dämpfung des Fahrersitzes in vertikaler Richtung, wobei es auch bekannt ist, diese Vertikaldämpfung durch eine Horizontaldämpfung zu ergänzen.

Die eingangs erläuterte vibrationsgedämpfte Sitzlagerung lässt sich der US-A 4 228 984 entnehmen. Hier besteht der Sitzträger aus zwei Rahmenteilen, die durch zwei parallel und im Abstand zueinander liegende Stangen miteinander verbunden sind. An dem einen der beiden Rahmenteile ist die Kolbenstange eines Stossdämpfers angelenkt, an dem entgegengesetzt gerichtete Zugfedern angreifen, die mit ihrem anderen Ende an jeweils einem der beiden Rahmenteile angreifen.

Bei der vorbekannten Ausführungsform besteht der Bodenteil ebenfalls aus zwei Rahmenteilen, die über eine Schiene miteinander verbunden sind, in die ein mit dem genannten Stossdämpfer verbundener Zapfen formschlüssig eingreift. In den beiden Rahmenteilen des Bodenteils sind insgesamt vier Lager angeordnet, von denen jeweils zwei miteinander fluchten und zur gleitenden Aufnahme der vorstehend genannten Stangen des Sitzträgers dienen. Die Zentrierung des Sitzträgers gegenüber dem Bodenteil erfolgt durch die beiden an dem Stossdämpfer angreifenden Zugfedern, während der parallel zur Verschiebungsachse liegende Stossdämpfer die begrenzten Verschiebungsbewegungen des Sitzträgers gegenüber dem Bodenteil dämpft.

Der Sitzträger weist unterschiedliche Querschnittshöhen und damit eine unregelmässige Aussenkontur auf und liegt über dem Bodenteil, so dass sich die Bauhöhe beider Teile angenähert addiert.

Ein Nachteil dieser vorbekannten vibrationsgedämpften Sitzlagerung ist darin zu sehen, dass sie nur eine in Längsrichtung liegende Verschiebungsachse aufweist, obwohl die in der Praxis auftretenden Vibrationen und sonstigen Bewegungen innerhalb einer Horizontalebene nahezu alle Richtungen aufweisen können, auch wenn es eine Hauptbewegungsrichtung in Längsrichtung gibt. Nachteilig ist ferner, dass die vorbekannte Sitzlagerung verhältnismässig hoch baut.

Eine Sitzlagerung mit in einer Horizontalebene allseitig bewegbarem Sitzträger ist an sich aus USA-3 134 568 bekannt. Dabei ist nachteilig, dass die Gleit-, Dämpfungs- und Rückstellelemente nicht in eine Ebene sondern übereinander angeordnet sind und nicht in einem Zwischenrahmen aufgenommen werden.

Weitere vorbekannte Sitzlagerungen lassen sich den folgenden Druckschriften entnehmen: US-A-3 061 260, 3 245 486, 3 335 996, 3 917 210, 3 999 800, 4 128 217 und 4 195 883, französische Patentschrift FR-A-742 189 und britische Patentschrift GB-A-1 303 936. Bei allen diesen Ausführungsformen ist die gedämpfte Relativverschiebung auf eine Verschiebungsachse beschränkt.

Der Erfindung liegt somit die Aufgabe zugrunde, die eingangs erläuterte Sitzlagerung so zu verbessern, dass sich in einer Horizontalebene mehrere Verschiebungsrichtungen ergeben, und dass eine Verringerung der Bauhöhe erreicht wird.

Diese Aufgabe wird gemäss der Erfindung durch folgende Merkmale gelöst:

a) Der Sitzträger ist im Verhältnis zu seiner horizontalen Ausdehnung flach und im wesentlichen plan ausgebildet;

b) der Sitzträger umschliesst einen Zwischenrahmen, der die genannten Gleit-, Dämpfungs- und Zentrierelemente für eine erste Relativverschiebung zwischen Sitzträger und Zwischenrahmen aufnimmt;

c) der Sitzträger umschliesst das Bodenteil, das Gleit-, Dämpfungs- und Zentrierelemente aufweist, so dass der Zwischenrahmen entlang einer zweiten Verschiebungsachse, die mit der ersten Verschiebungsachse einen Winkel einschliesst, relativ gegenüber dem Bodenteil begrenzt gedämpft verschiebbar und diesem gegenüber in einer Zentrierstellung federelastisch gehalten ist.

Dabei ist es zweckmässig, wenn die beiden Verschiebungsachsen senkrecht aufeinander stehen.

Dabei ist es vorteilhaft, wenn die Gleit-, Dämpfungs- und Zentrierelemente für die erste Relativverschiebung zwischen Sitzträger und Zwischenrahmen erste Stangen umfassen, die im Sitzträger angenähert parallel zur ersten Verschiebungsachse montiert und in ersten Lagern des Zwischenrahmens verschiebbar geführt sind, während die Gleit-, Dämpfungs- und Zentrierelemente für die zweite Relativverschiebung zwischen Zwischenrahmen und Bodenteil zweite Stangen umfassen, die im Zwischenrahmen angenähert parallel zur zweiten Verschiebungsachse montiert und in zweiten Lagern des Bodenteils verschiebbar geführt sind.

Ein spezielles Ausführungsbeispiel ist durch folgende Merkmale gekennzeichnet:

a) Der Zwischenrahmen ist im Verhältnis zu seiner horizontalen Ausdehnung flach und im wesentlichen plan ausgebildet, wobei seine beiden Stirnteile jeweils parallel zu einer der beiden ersten Stangen liegen;

b) ein erstes auseinanderliegendes Lagerpaar der ersten Lager ist an sich gegenüberliegenden ersten Lagerhalterungen des ersten Stirnteils des Zwischenrahmens befestigt und nimmt die erste Stange des ersten Stangenpaares gleitend verschiebbar auf;

c) ein zweites auseinanderliegendes Lagerpaar der ersten Lager ist an sich gegenüberliegenden zweiten Lagerhalterungen des zweiten Stirnteils des Zwischenrahmens befestigt und nimmt die zweite Stange des ersten Stangenpaares gleitend verschiebbar auf;

d) ein drittes auseinanderliegendes Lagerpaar der zweiten Lager nimmt die erste Stange des zweiten Stangenpaares gleitend verschiebbar auf;

e) ein viertes auseinanderliegendes Lagerpaar der zweiten Lager nimmt die zweite Stange des zweiten Stangenpaares gleitend verschiebbar auf.

Weitere Ausgestaltungen der Erfindung sind Gegenstand der Unteransprüche und werden zusammen mit weiteren Vorteilen der Erfindung anhand eines Ausführungsbeispieles näher erläutert.

Durch die gedämpfte Verschiebung des Zwischenrahmens relativ gegenüber den zweiten Lagern des Bodenteils entlang der zweiten Verschiebungsachse und die gleichzeitige gedämpfte Verschiebung des Sitzträgers und damit des auf ihm montierten Sitzes entlang der ersten Verschiebungsachse kann der eigentliche Sitz innerhalb einer im wesentlichen horizontalen Ebene in jeder Richtung eine gedämpfte Verschiebebewegung ausführen als Reaktion auf Vibrationen oder andere Bewegungen. Da der Zwischenrahmen, sowie alle Stangen, Lager, Federn und Stossdämpfer innerhalb der Aussenkontur des eine angenähert gleiche Dicke aufweisenden Aussenrahmens liegen, ergibt sich eine sehr flache und dadurch einfach zu handhabende Bauform.

In der Zeichnung ist eine als Beispiel dienende Ausführungsform der Erfindung dargestellt. Es zeigen:

Figur 1 in perspektivischer Darstellung eine Sitzanordnung mit einem Sitzträger;

Figur 2 den Sitzträger gemäss Figur 1 in Vorderansicht;

Figur 3 den Sitzträger gemäss Figur 1 in Seitenansicht;

Figur 4 in vergrössertem Massstab in Draufsicht den Sitzträger gemäss Figur 1 mit abgenommener oberer Abdeckung;

Figur 5 einen Schnitt gemäss der Linie 5–5 in Figur 4;

Figur 6 einen Schnitt entlang der Linie 6–6 in Figur 4;

Figur 7 einen Schnitt entlang der Linie 7–7 in Figur 4 und

Figur 8 einen Schnitt entlang der Linie 8–8 in Figur 4.

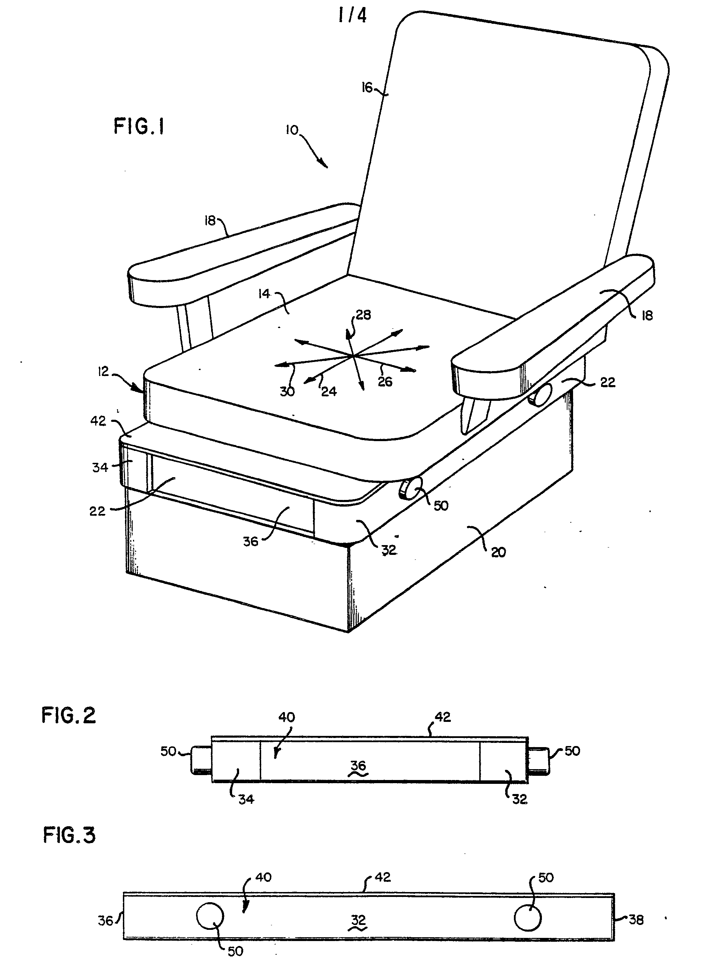

Die in Figur 1 dargestellte Sitzanordnung 10 gemäss der Erfindung umfasst einen Sitz 12 mit einem Sitzkissen 14, einer Rückenlehne 14 und zwei Armlehnen 16. Der Sitz 12 ist unter Zwischenschaltung einer kompakten, plan ausgebildeten allseitig vibrationsgedämpften Sitzlagerung 22 auf einem Tragsockel 20 befestigt.

Die Sitzlagerung 22 ist verhältnismässig flach und weitgehend plan ausgebildet und ermöglicht

dem Sitz 12 begrenzte gedämpfte Verschiebungsbewegungen in jeder Richtung innerhalb einer angenähert horizontalen Ebene, z.B. in der durch den Doppelpfeil 24 angedeuteten Längsrichtung, der durch den Doppelpfeil 26 angedeuteten Querrichtung sowie in Richtung der beiden weiter eingezeichneten Doppelpfeile 28, 30. Jede Zwischenrichtung ist möglich. Die Verschiebemöglichkeit des Sitzes 12 ist also nicht auf eine oder auch nur zwei Verschiebungsrichtungen begrenzt.

Die Figuren 2 und 3 zeigen die Stirn- bzw. Längsseiten der Sitzlagerung 22, die sich gegenüber und parallel zueinander liegende Seitenrahmenteile 32, 34 und entsprechende Stirnrahmenteile 36, 38 umfasst, die gemeinsam einen flachen, plan ausgebildeten, rechteckigen Sitztragrahmen 40 bilden, der von einer oberen Abdeckung 42 abdeckbar ist. Die beiden Seitenrahmenteile 32, 34 weisen jeweils ein Paar Abdeckkappen 50 auf, die die Enden zweier später näher beschriebenen Stangen abdecken.

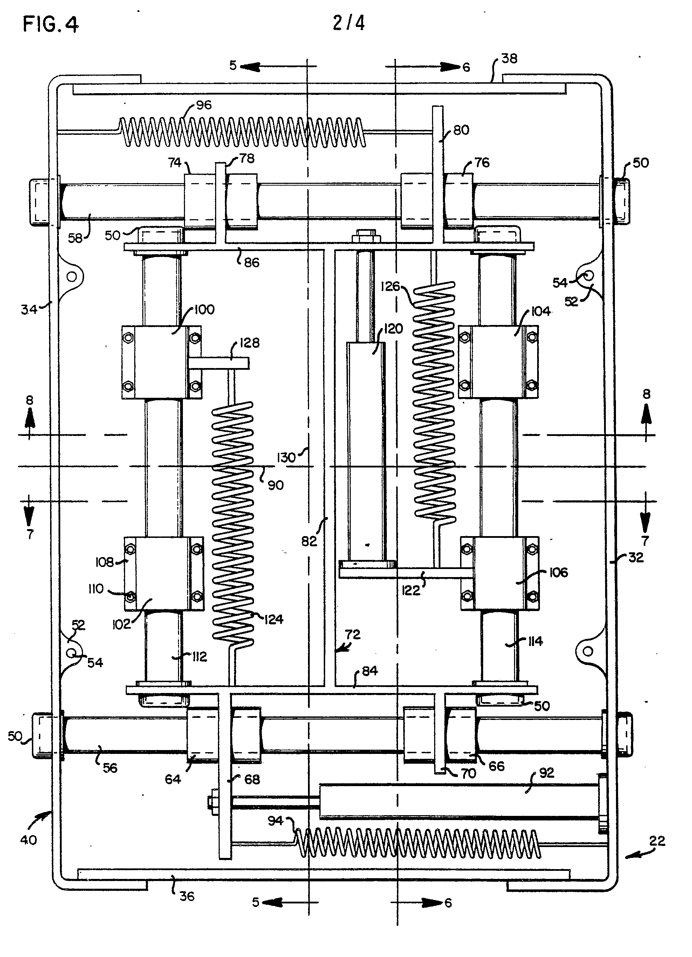

Figur 4 zeigt in vergrössertem Massstab die Sitzlagerung 22, zur besseren Übersichtlichkeit aber mit abgenommener oberer Abdeckung 42. Jedes Seitenrahmenteil 32 weist ein Paar Sitzbefestigungslaschen 52 auf, die an der Innenseite des Sitztragrahmens 40 im Abstand voneinander und unmittelbar neben den oberen Rändern der Seitenrahmenteile 32, 34 sitzen. Die Sitzbefestigungslaschen 52 weisen Bohrungen 54 auf, so dass der Sitz 12 über Schraubbolzen o.dgl. auf dem Sitztragrahmen 40 befestigt werden kann.

Neben dem Stirnrahmenteil 36 und parallel hierzu ist eine Stange 56 und neben dem Stirnrahmenteil 38 ist eine Stange 58 angeordnet, die parallel zu der Stange 56 liegt. Beide Stangen 56, 58 durchdringen mit ihren Enden die Seitenrahmenteile 32, 34 und ragen in die vorstehend erwähnten Abdeckkappen 50. Die Stange 56 ist gleitend verschiebbar in einem ersten mit Abstand voneinander angeordneten Lagerpaar 64, 66 gelagert, die in stegförmig ausgebildeten Lagerhalterungen 68, 70 sitzen, die ihrerseits an einem Zwischenrahmen 72 befestigt sind. Die Stange 58 ist gleitend verschiebbar in einem zweiten Lagerpaar 74, 76 geführt, die im Abstand voneinander in stegförmig ausgebildeten Lagerhalterungen 78, 80 des Zwischenrahmens 72 sitzen. Letzterer besteht aus einem Mittelsteg 82, der zwei parallel zueinander angeordnete Stirnteile 84, 86 miteinander verbindet. Die stegförmig ausgebildeten Lagerhalterungen 68, 70 erstrecken sich vom Stirnteil 84 entgegen dem Mittelsteg 82 rechtwinklig nach aussen. Entsprechend sind die Lagerhalterungen 78, 80 am zweiten Stirnteil 86 des Zwischenrahmens 72 befestigt.

Da die Lager 64, 66, 74, 76 auf den Stangen 56, 58 gleiten können, ist die Sitztragrahmen 40 entlang einer ersten Verschiebungsachse 90 verschiebbar. Diese Relativbewegung wird gedämpft durch einen Querstossdämpfer 92, der neben der Stange 56 und hierzu angenähert parallel angeordnet ist und sich vom Seitenrahmenteil 32 zur Lagerhalterung 68 erstreckt. Dieser Stossdämpfer 92 weist vorzugsweise eine veränderbare Drosselöffnung auf, so dass sich das gewünschte Dämpfungsmass einstellen lässt.

Der Sitztragrahmen 40 wird normalerweise relativ gegenüber dem Zwischenrahmen 72 in einer Zentrierstellung gehalten und zwar durch ein erstes Federpaar 94, 96, dessen Federn vorgespannt sind und in entgegengesetzte Richtungen wirken. Die Feder 94 liegt neben dem Stossdämpfer 92 und angenähert parallel hierzu und ist einerseits an der Lagerhalterung 68 und andererseits an dem Seitenrahmenteil 32 befestigt. Die Feder 96 liegt neben der Stange 58 und angenähert parallel hierzu und ist einerseits an dem Seitenrahmenteil 34 und andererseits an der Lagerhalterung 80 befestigt. Verschiebt sich der Sitztragrahmen 40 nach rechts, wenn man die Figur 4 betrachtet, so verringert sich die Federspannung in der Feder 94, während sich diejenige der Feder 96 erhöht. Bei einer entsprechenden Verschiebung nach links ergibt sich das umgekehrte Ergebnis. Die Federn 94, 96 setzen somit einer Verschiebung des Sitztragrahmens 40 relativ gegenüber dem Zwischenrahmen 72 in Richtung der Verschiebungsachse 90 einen genau bestimmbaren Widerstand entgegen und versuchen so den Sitztragrahmen 40 gegenüber dem Zwischenrahmen 72 in seiner in Figur 4 dargestellten Zentrierstellung zu halten.

Die in Figur 4 dargestellte Sitzlagerung 22 ist auf dem in Figur 1 gezeigten Tragsockel 20 über vier Lager 100, 102, 104, 106 befestigt. Jedes dieser Lager weist eine verhältnismässig flache Platte 108 auf, die am Lagerboden befestigt und mit Bohrungen 110 versehen ist zur Aufnahme von Schrauben o.dgl. zur Befestigung der Lager auf dem Tragsockel 20. In den Lagern 100, 102 ist eine Stange 112 verschiebbar geführt, die mit ihren beiden Enden die Stirnteile 84, 86 des Zwischenrahmens 72 durchdringt und hier in Abdeckkappen 50 ragt. In den Lagern 104, 106 ist eine Stange 114 verschiebbar geführt, die ebenfalls mit ihren Enden die Stirnteile 84, 86 durchdringt und hier in Abdeckkappen 50 ragt. Die Stangen 112, 114 liegen beidseitig des Mittelsteges 82 des Zwischenrahmens 72 und sind angenähert parallel zueinander angeordnet.

Zwischen dem genannten Mittelsteg 82 und der Stange 114 ist parallel zu letzterer ein Längsstossdämpfer 120 angeordnet, der einerseits mit dem Stirnteil 86 des Zwischenrahmens 72 und andererseits mit einem Arm 122 verbunden ist, der an dem Lager 106 sitzt. Ein zweites Paar Federn 124, 126 ist einander entgegenwirkend zwischen den Lagern 100, 106 und dem Zwischenrahmen 72 angeordnet. Auch diese Federn sind vorgespannt. Die Feder 124 liegt zwischen dem Mittelsteg 82 und der Stange 112 und zwar parallel zu letzterer und greift einerseits an dem Stirnteil 84 des Zwischenrahmens 72 und andererseits an einem Arm 128 an, der an dem Lager 100 sitzt. Die Feder 126 liegt zwischen dem Längsstossdämpfer 120 und der Stange 114 und zwar parallel zu letzterer und greift einerseits an dem Stirnteil 86 und andererseits an dem Arm 122 an.

Durch die relative Gleitverschiebung zwischen den Stangen 112, 114 und den Lagern 100, 102, 104 und 106 kann der Zwischenrahmen 72 in Richtung einer zweiten Verschiebungsachse 130, die senkrecht zur ersten Verschiebungsachse 90 steht, eine Relativverschiebung gegenüber dem Tragsockel 20 durchführen, auf dem die genannten Lager befestigt sind. Diese Bewegung wird durch den Längsstossdämpfer 120 gedämpft und durch die einander entgegenwirkenden Federn 124, 126 gehemmt. Durch eine Verschiebung des Zwischenrahmens 72 nach unten, wenn man Figur 4 betrachtet, wird die Spannung in der Feder 124 verringert, die der Feder 126 jedoch erhöht. Bei umgekehrter Verschiebung ergibt sich das umgekehrte Ergebnis.

Die erste Verschiebungsachse 90 stimmt mit der Querverschiebung des Sitzes 12 überein, während die zweite Verschiebungsachse 130 mit der Längsverschiebung des Sitzes 12 übereinstimmt. Aufgrund der gleichzeitig möglichen Orthogonalverschiebungen des Sitztragrahmens 40 gegenüber dem Zwischenrahmen 72 kann der Sitztragrahmen 40 innerhalb einer Horizontalebene in jeder Richtung eine gedämpfte Verschiebungsbewegung relativ gegenüber dem Tragsockel 20 ausüben. Diese Verschiebungsbewegung wird durch die Stossdämpfer 92, 120 gedämpft, während die Federn 94, 96, 124 u. 126 diese Bewegung hemmen und ggf. den Sitztragrahmen 40 mit seinem Sitz 12 in seine nominelle Zentrierstellung zurückziehen.

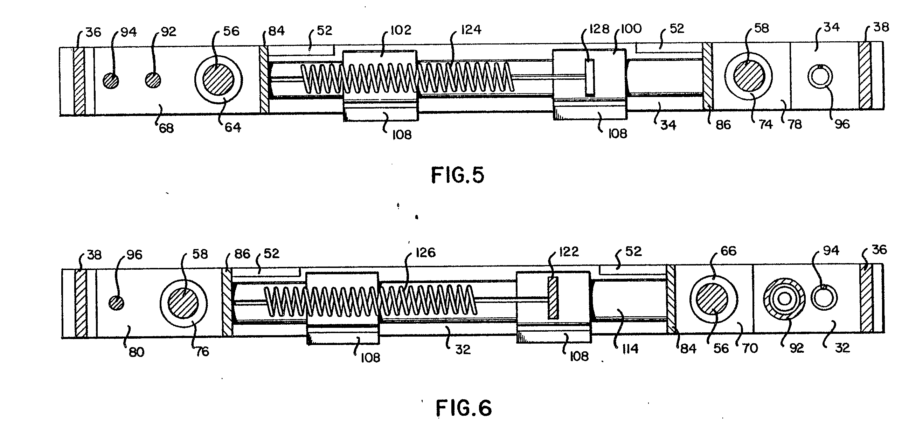

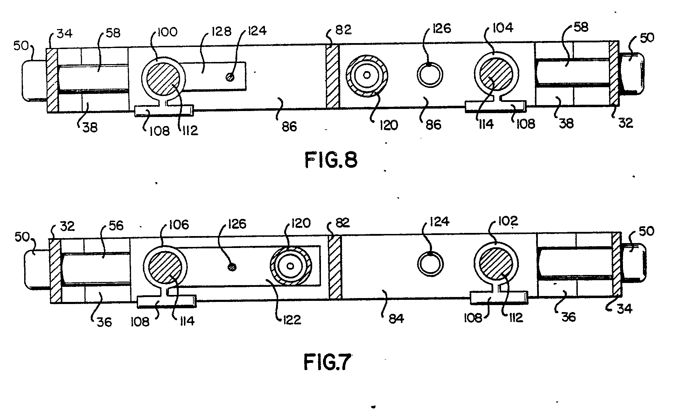

Die Figuren 5 bis 8 lassen erkennen, dass nicht nur der Zwischenrahmen 72, sondern auch alle Stangen 56, 58, 112 und 114, Lager 64, 66, 74, 76, 100, 102, 104, 106, Federn 94, 96, 124, 126 und Stossdämpfer 92, 120 innerhalb der Aussenkontur des flachen, gleiche Dicke aufweisenden Aussenrahmens 40 liegen. Dabei haben die Teile 68, 70, 76, 78, 82, 84 und 86 des Zwischenrahmens 72 etwa die gleiche Höhe wie die Ranmenteile 32, 34, 36, 38 des Sitztragrahmens 40. Die Stangen 56, 58 sind in halber Höhe der Seitenwandteile 32, 34 und die Stangen 112, 114 in halber Höhe der Stirnteile 84, 86 montiert. Das Gleiche gilt für die Anordnung der übrigen Bestandteile, deren Durchmesser kleiner ist als die Höhe der genannten Rahmenteile. Lediglich die zur Montage dienenden flachen Platten 108 der Lager 100, 102, 104 und 106 geringfügig unterhalb des Bodens des Sitztragrahmens 40, um einen ausreichenden lichten Abstand zwischen der Sitzlagerung 22 und dem Tragsockel 20 sicherzustellen.

**Patentansprüche**

1. Vibrationsgedämpfte Sitzlagerung (22), bestehend aus einem den eigentlichen Sitz (12) aufnehmenden Sitzträger (40), der über Gleit-, Dämpfungs- und Zentrierelemente (56, 58, 64, 66, 74, 76, 92, 94, 96) so mit einem Bodenteil (108) verbunden ist, dass der Sitzträger (40) entlang einer Verschiebungsachse (90) relativ gegenüber dem Bodenteil (108) begrenzt gedämpft verschiebbar und diesem gegenüber in einer Zentrierstellung federelastisch gehalten ist, gekennzeichnet durch folgende Merkmale:

a) Der Sitzträger (40) ist im Verhältnis zu seiner horizontalen Ausdehnung flach und im wesentlichen plan ausgebildet;

b) der Sitzträger (40) umschliesst einen Zwischenrahmen (72), der die genannten Gleit-, Dämpfungs- und Zentrierelemente (56 bis 96) für eine erste Relativverschiebung zwischen Sitzträger (40) und Zwischenrahmen (72) aufnimmt;

c) der Sitzträger (40) umschliesst das Bodenteil (108), das Gleit-, Dämpfungs- und Zentrierelemente (100, 102, 104, 106, 112, 114, 120, 124, 126) aufweist, so dass der Zwischenrahmen (72) entlang einer zweiten Verschiebungsachse (130), die mit der ersten Verschiebungsachse (90) einen Winkel einschliesst, relativ gegenüber dem Bodenteil (108) begrenzt gedämpft verschiebbar und diesem gegenüber in einer Zentrierstellung federelastisch gehalten ist.

2. Sitzlagerung nach Anspruch 1, dadurch gekennzeichnet, dass die beiden Verschiebungsachsen (90, 130) senkrecht aufeinander stehen.

3. Sitzlagerung nach Anspruch 1 oder 2, dadurch gekennzeichnet, dass die Gleit-, Dämpfungs- und Zentrierelemente (56 bis 96) für die erste Relativverschiebung zwischen Sitzträger (40) und Zwischenrahmen (72) erste Stangen (56, 58) umfassen, die im Sitzträger (40) angenähert parallel zur ersten Verschiebungsachse (90) montiert und in ersten Lagern (64, 66, 74, 76) des Zwischenrahmens (72) verschiebbar geführt sind, während die Gleit-, Dämpfungs- und Zentrierelemente (100 bis 126) für die zweite Relativverschiebung zwischen Zwischenrahmen (72) und Bodenteil (108) zweite Stangen (112, 114) umfassen, die im Zwischenrahmen angenähert parallel zur zweiten Verschiebungsachse (130) montiert und in zweiten Lagern (100, 102, 104, 106) des Bodenteils (108) verschiebbar geführt sind.

4. Sitzlagerung nach Anspruch 1, 2 oder 3, dadurch gekennzeichnet, dass die Gleit-, Dämpfungs- und Zentrierelemente (56–96) für die erste Relativverschiebung erste Federn (94, 96), die den Sitzträger (40) relativ gegenüber dem Zwischenrahmen (72) federelastisch in einer Zentrierstellung halten, sowie einen ersten Stossdämpfer (92) umfassen, und dass die Gleit-, Dämpfungs- und Zentrierelemente (100 bis 126) für die zweite Relativverschiebung zweite Federn (124, 126), die den Zwischenrahmen relativ gegenüber dem Bodenteil (108) federelastisch in einer Zentrierstellung halten, sowie einen zweiten Stossdämpfer (120) umfassen.

5. Sitzlagerung nach einem der vorhergehenden Ansprüche, dadurch gekennzeichnet, dass der Sitzträger aus einem Aussenrahmen (40) mit sich gegenüberliegenden Seitenrahmenteilen (32, 34) besteht, die über die ersten Stangen (56, 58) miteinander verbunden sind.

6. Sitzlagerung nach einem der vorhergehenden Ansprüche, dadurch gekennzeichnet, dass der Zwischenrahmen (72) sich gegenüberliegende Stirnteile (84, 86) aufweist, die über die zweiten Stangen (112, 114) miteinander verbunden sind.

7. Sitzlagerung nach einem der vorhergehenden Ansprüche, dadurch gekennzeichnet, dass ein erstes Federpaar (94, 96) zwischen den Zwischenrahmen (72) und die Seitenrahmenteile (32, 34) des Aussenrahmens (40) und ein zweites Federpaar (124, 126) zwischen die zweiten Lager (100, 106) und die Stirnteile (84, 86) des Zwischenrahmens (72) geschaltet sind.

8. Sitzlagerung nach einem der vorhergehenden Ansprüche, dadurch gekennzeichnet, dass der erste Stossdämpfer (92) zwischen den Aussenrahmen (40) und den Zwischenrahmen (72), der zweite Stossdämpfer (120) aber zwischen den Zwischenrahmen (72) und die zweiten Lager (106) geschaltet sind.

9. Sitzlagerung nach einem der vorhergehenden Ansprüche, gekennzeichnet durch folgende Merkmale:

a) Der Zwischenrahmen (72) ist im Verhältnis zu seiner horizontalen Ausdehnung flach und im wesentlichen plan ausgebildet, wobei seine beiden Stirnteile (84, 86) jeweils parallel zu einer der beiden ersten Stangen (56, 58) liegen;

b) ein erstes auseinanderliegendes Lagerpaar (64, 66) der ersten Lager (64, 66, 74, 76) ist an sich gegenüberliegenden ersten Lagerhalterungen (68, 70) des ersten Stirnteils (84) des Zwischenrahmens (72) befestigt und nimmt die erste Stange (56) des ersten Stangenpaares (56, 58) gleitend verschiebbar auf;

c) ein zweites auseinanderliegendes Lagerpaar (74, 76) der ersten Lager ist an sich gegenüberliegenden zweiten Lagerhalterungen (78, 80) des zweiten Stirnteils (86) des Zwischenrahmens (72) befestigt und nimmt die zweite Stange (58) des ersten Stangenpaares (56, 58) gleitend verschiebbar auf;

d) ein drittes auseinanderliegendes Lagerpaar (100, 102) der zweiten Lager (100, 102, 104, 106) nimmt die erste Stange (112) des zweiten Stangenpaares (112, 114) gleitend verschiebbar auf;

e) ein viertes auseinanderliegendes Lagerpaar (104, 106) der zweiten Lager nimmt die zweite Stange (114) des zweiten Stangenpaares (112, 114) gleitend verschiebbar auf.

10. Sitzlagerung nach Anspruch 9, gekennzeichnet durch folgende Merkmale:

a) Die beiden Stirnteile (84, 86) des Zwischenrahmens (72) sind über einen parallel zwischen den zweiten Stangen (112, 114) liegenden Mittelsteg (82) miteinander verbunden;

b) eine erste Lagerhalterung (68) erstreckt sich von dem ersten Stirnteil (84) entgegen dem Mittelsteg (82) nach aussen und bildet ein Widerlager für den ersten Stossdämpfer (92) sowie für die erste Feder (94) des ersten Federpaares (94, 96);

c) eine zweite Lagerhalterung (80) erstreckt sich von dem zweiten Stirnteil (86) entgegen dem Mittelsteg (82) nach aussen und bildet für die zweite Feder (96) des ersten Federpaares (94, 96) ein Widerlager.

11. Sitzlagerung nach einem der vorhergehenden Ansprüche, dadurch gekennzeichnet, dass der Zwischenrahmen (72) sowie alle Stangen (56, 58, 112, 114), Lager (64, 66, 74, 76, 100, 102, 104, 106), Federn (94, 96, 124, 126) und Stossdämpfer (92, 120) innerhalb der Aussenkontur des eine angenähert gleiche Dicke aufweisenden Aussenrahmens (40) liegen.

**Revendications**

1. Système de montage ou de suspension (22) à amortissement des vibrations pour siège, comportant un support (40) recevant le siège proprement dit (12), qui est relié à une embase (108) par l'intermédiaire d'éléments de glissement, d'amortissement et de centrage, (56, 58, 64, 66, 74, 76, 92, 94, 96) de telle sorte que le support de siège (40) soit déplaçable de façon amortie et limitée par rapport à l'embase (108) selon un axe de déplacement (90), et soit maintenu élastiquement dans une position centrée par rapport à ladite embase, caractérisé par les particularités suivantes:

a) le support de siège (40) est plat par rapport à son étendue horizontale et a d'une façon générale un profil plan;

b) le support de siège (40) entoure un châssis intermédiaire (72), qui reçoit les éléments de glissement, d'amortissement et de centrage précités (56 à 96) pour permettre un premier déplacement relatif entre le support de siège (40) et le châssis intermédiaire (72);

c) le support de siège (40) entoure l'embase (108), qui comprend des éléments de glissement, d'amortissement et de centrage (100, 102, 104, 106, 112, 114, 120, 124, 126), de sorte que le châssis intermédiaire (72) est déplaçable de façon amortie et limitée par rapport à l'embase (108) le long d'un second axe de déplacement (130) qui forme un angle avec le premier axe de déplacement (90), et est maintenu élastiquement dans une position centrée par rapport à cette embase.

2. Système de montage pour siège, suivant la revendication 1, caractérisé en ce que les deux axes de déplacement (90, 130) sont perpendiculaires entre eux.

3. Système de montage pour siège suivant la revendication 1 ou 2, caractérisé en ce que les éléments de glissement, d'amortissement et de centrage (56 à 96) permettant le premier déplacement relatif entre le support de siège (40) et le châssis intermédiaire (72) comprennent des premières barres (56, 58) qui sont montées dans le support de siège (40) en principe parallèlement au premier axe de déplacement (90) et qui sont guidées de façon coulissante dans des premiers paliers (64, 66, 74, 76) du châssis intermédiaire (72), tandis que les éléments de glissement, d'amortissement et de centrage (100 à 126) permettant le second déplacement relatif entre le châssis intermédiaire (72) et l'embase (108) comprennent des secondes barres (112, 114) qui sont montées dans le châssis intermédiaire en principe parallèlement au second axe de déplacement (130) et qui sont guidées de façon coulissante dans des seconds paliers (100, 102, 104, 106) de l'embase (108).

4. Système de montage pour siège suivant la revendication 1, 2 ou 3, caractérisé en ce que les éléments de glissement, d'amortissement et de centrage (56–96) permettant le premier déplacement relatif comprennent des premiers ressorts (94, 96), qui maintiennent élastiquement le support de siège (40) dans une position centrée par rapport au châssis intermédiaire (72), ainsi qu'un premier amortisseur (92), et en ce que les éléments de glissement, d'amortissement et de centrage (100 à 126) permettant le second déplacement relativ comprennent des seconds ressorts (124, 126) qui maintiennent élastiquement le châssis intermédiaire dans une position centrée par rapport à l'embase (108), ainsi qu'un second amortisseur (120).

5. Système de montage pour siège suivant l'une quelconque des revendications précédentes, caractérisé en ce que le support de siège est constitué par un cadre extérieur (40) comprenant des membrures latérales opposées (32, 34) qui sont reliées ensemble par les premières barres (56, 58).

6. Système de montage pour siège suivant l'une quelconque des revendications précédentes, caractérisé en ce que le châssis intermédiaire (72) comporte des membrures terminales opposées (84, 86) qui sont reliées ensemble par les secondes barres (112, 114).

7. Système de montage pour siège suivant l'une quelconque des revendications précédentes, caractérisée en ce qu'une première paire de ressorts (94, 96) est interposée entre le châssis intermédiaire (72) et les membrures latérales (32, 34) du cadre extérieur (40) et en ce qu'une seconde paire de ressorts (124, 126) est interposée entre les seconds paliers (100, 106) et les membrures terminales (84, 86) du châssis intermédiaire (72).

8. Système de montage pour siège suivant l'une quelconque des revendications précédentes, caractérisé en ce que le premier amortisseur (92) est monté entre le cadre extérieur (40) et le châssis intermédiaire (72) et en ce que le second amortisseur (120) est monté entre le châssis intermédiaire (72) et les seconds paliers (106).

9. Système de montage ou de suspension pour siège suivant l'une quelconque des revendications précédentes, caractérisé par les particularités suivantes:

a) le châssis intermédiaire (72) est plat par rapport à son étendue horizontale et a d'une façon générale un profil plan, ses deux membrures terminales (84, 86) étant chaque fois parallèles à l'une des deux premières barres (56, 58);

b) une première paire de paliers écartés l'un de l'autre (64, 66) parmi les premiers paliers (64, 66, 74, 76) sont fixés sur des premiers supports opposés (68, 70) de la première membrure terminale (84) du châssis intermédiaire (72) et reçoivent à coulissement la première barre (56) de la première paire de barres (56, 58);

c) une seconde paire de paliers écartés l'un de l'autre (74, 76) parmi les premiers paliers sont fixés sur des seconds supports opposés (78, 80) de la seconde membrure terminale (86) du châssis intermédiaire (72) et reçoivent à coulissement la seconde barre (58) de la première paire de barres (56, 58);

d) une troisième paire de paliers écartés l'un de l'autre (100, 102) parmi les seconds paliers (100, 102, 104, 106) reçoivent à coulissement la première barre (112) de la seconde paire de barres (112, 114);

e) une quatrième paire de paliers écartés l'un de l'autre (104, 106) parmi les seconds paliers reçoivent à coulissement la seconde barre (114) de la seconde paire de barres (112, 114).

10. Système de montage pour siège suivant la revendication 9, caractérisé par les particularités suivantes

a) les deux membrures terminales (84, 86) du châssis intermédiaire (72) sont reliées entre elles par une membrure médiane (82) disposée parallèlement entre les secondes barres (112, 114);

b) un premier support de palier (68) s'étend depuis la première membrure terminale (84) à l'opposé de la membrure médiane (82) en direction de l'extérieur et forme une portée pour le premier amortisseur (92) ainsi que pour le premier ressort (94) de la première paire de ressorts (94, 96);

c) un second support de palier (80) s'étend depuis la seconde membrure terminale (86) à l'opposé de la membrure médiane (82) en direction de l'extérieur et forme une portée pour le second ressort (96) de la première paire de ressorts (94, 96).

11. Système de montage pour siège suivant l'une quelconque des revendications précédentes, caractérisé en ce que le châssis intermédiaire (72) ainsi que toutes les barres (56, 58, 112, 114), les paliers (64, 66, 74, 76, 100, 102, 104, 106), les ressorts (94, 96, 124, 126) et les amortisseurs (92, 120) se trouvent à l'intérieur du contour extérieur du cadre extérieur (40) présentant sensiblement la même épaisseur.

## Claims

1. A vibration attenuator seat support (22) comprising a seat support assembly (40) for supporting the actual seat (12); said seat support assembly (40) being connected by means of sliding, damping and centering elements (56, 58, 64, 66, 74, 76, 92, 94, 96) with a base assembly (108) in that way that said seat support assembly (40) is slidable by a limited attenuated movement relative to said base assembly (108) along a displacement axis (90) and that said seat support assembly (40) can be retained resiliently in a centering position relative to said base assembly (108); characterized by the following features:

a) said seat support assembly (40) is flat with respect to its horizontal extension and generally planar;

b) said seat support assembly (40) encloses an intermediate frame (72), including said sliding, damping and centering elements (56 to 96) for a first relative displacement between seat support assembly (40) and intermediate frame (72);

c) said seat support assembly (40) encloses said base assembly (108), including sliding, damping and centering elements (100, 102, 104, 106, 112, 114, 120, 124, 126) so that said intermediate frame (72) is slidable by a limited attenuated movement relative to said base assembly (108) along a second displacement axis (130), forming an angle with said first displacement axis (90), and that said intermediate frame (72) can be retained resiliently in a centering position relative to said base assembly (108).

2. Seat support according to claim 1, characterized in that said two displacement axes (90, 130) are perpendicular to each other.

3. Seat support according to claim 1 or 2, characterized in that said sliding, damping and centering elements (56 to 96) for the first relative displacement between seat support assembly (40) and intermediate frame (72) include first rods (56, 58) being mounted within said seat support assembly (40) approximately parallel to said first displacement axis (90) and being movably guided in first bearings (64, 66, 74, 76) of the intermediate frame (72), while the sliding, damping and centering elements (100 to 126) for the second relative displacement between intermediate frame (72) and base assembly (108) include second rods (112, 114), being mounted within said intermediate frame approximately parallel to said second displacement axis (130) and being movably guided in second bearings (100, 102, 104, 106) of said base assembly (108).

4. Seat support according to claims 1, 2 or 3, characterized in that said sliding, damping and centering elements (56–96) for the first relative displacement include first springs (94, 96) retaining resiliently said seat support assembly (40) in a centering position relative to said intermediate frame (72), as well as a first shock absorber (92), and that said sliding, damping and centering elements (100 to 126) for the second relative movement include second springs (124, 126) retaining resiliently said intermediate frame in a centering position relative to said base assembly (108) as well as a second shock absorber (120).

5. Seat support according to one of the preceding claims, characterized in that said seat support assembly comprises an outer frame (40) with opposite lateral frame elements (32, 34) being connected with each other by said first rods (56, 58).

6. Seat support according to one of the preceding claims, characterized in that the intermediate frame (72) have opposite front parts (84, 86) being connected with each other by said second rods (112, 114).

7. Seat support according to one of the preceding claims, characterized in that a first pair of springs (94, 96) is coupled between the intermediate frame (72) and the lateral frame elements (32, 34) of said outer frame (40), and a second pair of springs (124, 126) is coupled between said second bearings (100, 106) and said front parts (84, 86) of the intermediate frame (72).

8. Seat support according to one of the preceding claims, characterized in that said first shock absorber (92) is coupled between said outer frame (40) and said intermediate frame (72), said second shock absorber (120), however, being coupled between said intermediate frame (72) and said second bearings (106).

9. Seat support according to one of the preceding claims, characterized by the following features:

a) said intermediate frame (72) is flat with respect to its horizontal extension and generally planar, each of its two front parts (84, 86) being disposes parallel to one of the two first rods (56, 58);

b) a first pair of spaced-apart bearings (64, 66) of said first bearings (64, 66, 74, 76) is fixed to opposite first mountings (68, 70) of the first front part (84) of the intermediate frame (72) and slidably receives the first rod (56) of the first pair of rods (56, 58);

c) a second pair of spaced-apart bearings (74, 76) of said first bearings is fixed to opposite second mountings (78, 80) of said second front part (86) of said intermediate frame (72) and slidably receives the second rod (58) of the first pair of rods (56, 58);

d) a third pair of spaced-apart bearings (100, 102) of said second bearings (100, 102, 104 106) slidably receives said first rod (112) of said second pair of rods (112, 114);

e) a fourth pair of spaced-apart bearings (104, 106) of said second bearings slidably receives the second rod (114) of said second pair of rods (112, 114).

10. Seat support according to claim 9, characterized by the following features:

a) the two front parts (84, 86) of the intermediate frame (72) are connected with each other by a central web (82) parallel disposed between said second rods (112, 114);

b) a first mounting (68) extends outwardly from said first front part (84) opposite the central web (82) and forms an abutment for said first shock absorber (92) as well as for the first spring (94) of said pair of springs (94, 96);

c) a second mounting (80) extends outwardly from said second front part (86) opposite the central web (82) and forms an abutment for said second spring (96) of said first pair of springs (94, 96).

11. Seat support according to one of the preceding claims, characterized in that said intermediate frame (72) as well as all rods (56, 58, 112, 114), bearings (64 66 74, 76, 100, 102, 104, 106), springs (94, 96, 124, 126) and shock absorbers (92, 120) are contained within the outer contour of the outer frame (40) having approximately the same thickness.

FIG.1

FIG.2

FIG.3

FIG. 4

FIG.5

FIG.6

FIG.8

FIG.7